# EUROPÄISCHE PATENTSCHRIFT

(11) **EP 0 493 385 B1**
(45) Veröffentlichungstag und Bekanntmachung des Hinweises auf die Patenterteilung: **02.03.1994**
(21) Anmeldenummer: 90909692.7
(22) Anmeldetag: 28.06.1990
(51) Int. Cl.: G01D 5/244, G01D 5/24

(54) **HOCHAUFLÖSENDER ENCODER**
HIGH-RESOLUTION CODER
CODEUR HAUTE RESOLUTION

(30) Priorität: 01.07.1989 DE 3921756
(43) Veröffentlichungstag der Anmeldung: 08.07.1992
(73) Patentinhaber: Teldix GmbH, D-69046 Heidelberg (DE)
(72) Erfinder: HETTLAGE, Eckart, D-7500 Karlsruhe 41 (DE)
(74) Vertreter: Wiechmann, Manfred, Dipl.-Ing.
(86) Internationale Anmeldenummer: EP9001033
(87) Internationale Veröffentlichungsnummer: WO9100498

(56) Entgegenhaltungen:
- EP-A- 0 258 725
- DE-A- 3 201 811
- FR-A- 2 441 173
- US-A- 4 803 425

## Beschreibung

Die Erfindung betrifft einen hochauflösenden Encoder nach der Gattung des Hauptanspruchs.

### Stand der Technik

Aus der DE-OS 38 33 115 ist ein optischer Kodierer zur Positionsmessung bei Werkzeugmaschinen bekannt. Dieser Kodierer besitzt eine kohärentes, paralleles Licht aussendende Lichtquelle, eine Skala mit einer Gitterspur mit einheitlicher Gitterkonstanten, jedoch mit unterschiedlichem Verhältnis von lichtsperrenden und lichtdurchlässigen Abschnitten, die das von der Lichtquelle kommende Licht beugt, und eine fotoelektrische Wandlereinrichtung, die mehrere Beugungslichtstrahlen verschiedener Ordnung der von der Skala durch Beugung erzeugten Lichtstrahlen empfängt und entsprechend ihrer Intensität in elektrische Signale umsetzt. Der Kodierer besitzt weiter eine Leseeinrichtung, die die Verhältnisse der von der fotoelektrischen Wandlereinheit ausgegebenen elektrischen Signale nach Maßgabe der Muster der Gitterspur, die sich mit der Relativbewegung zwischen Skale einerseits und Lichtquelle und fotoelektrischer Wandlereinheit andererseits ändern, ermittelt und die Verhältnisse mit Hilfe einer Umsetzeinrichtung für die Ausgabe umsetzt in Positionsdaten für die Skala.

Aus der EP 0 258 725 A2 ist ein kapazitiver Linear- oder Drehgeber zum Steuern und Positionieren von bewegten Gegenständen bekannt. In seiner Ausführung als Drehgeber besteht er aus zwei einen gegenseitigen Abstand bildenden, einander gegenüberliegenden Statoren, in deren Zwischenraum ein Rotor drebbar angeordnet ist. Der Rotor ist mit einer, mit dem bewegten Gegenstand gekoppelten, Welle drehfest verbunden.

Auf den jeweils einander zugewandten Seiten der Statoren und des Rotors sind elektrisch leitfähige Belege angeordnet, die mit dem Luftspalt jeweils Kondensatoren bilden, deren Kapazitätswert sich mit der Drehung des Rotors ändert.

Zur Erreichnung von Genauigkeit und Auflösung sind die Beläge so auf dem Rotor und den Statoren angeordnet, daß sich mindestens zwei kreisringförmige, konzentrische Bereiche ergeben, von denen der eine Bereich die Meßspur eines Grobmeßsystems und der andere Bereich die Meßspur eines Feinmeßsystems bildet. Die digital erfassten Werte des Grobmeßsystems werden mit den Werten des Feinmeßsystems so kombiniert, daß sich ein eindeutig definierter Absolutwert für den Drehwinkel ergibt. Dies wird dadurch erreicht, daß die von aus einander zugeordneten Belägen von Rotor und Statoren entstehenden Koppelkapazitäten einen Verlauf über die Verdrehung der Welle aufweisen, der stückweise sinusförmig ist und daß durch Addition mehrerer gegenseitig verschobener und mit unterschiedlichem Vorzeichen versehener stückweise sinusförmig verlaufender Kapazitätsverläufe ein etwa rein sinusförmiger Kapazitätsverlauf mit einer von der Anzahl der Meßspuren abhängigen Periode entsteht.

Weiter ist aus der DE-OS 28 47 522 ein induktiver Geber zur Erfassung der Drehzahl und/oder eines markierten Drehwinkels bekannt. Mit einer Welle ist eine Scheibe drehfest verbunden. Die Scheibe weist an ihrem Umfang mehrere in Drehrichtung hintereinanderliegende erste Segmentbereiche auf, die sägezahnförmig ausgebildet sind. Die einzelnen Segmentbereiche sind voneinander durch eine steile, quer zur Drehrichtung liegende, Flanke begrenzt. Weiter weist die Scheibe mindestens einen zweiten Segmentbereich auf, der eine zu den ersten Segmentbereichen spiegelbildliche Form besitzt.

Dieser Geber kann nur markierte Drehwinkel bestimmen.

Es hat sich gezeigt, daß Bauelemente wie Lichtquellen, besonders unter harten Umweltbedingungen, Zuverlässigkeitsmängel aufweisen. Z.B. sind schon mehrere Beobachtungssatelliten aufgrund von Ausfällen der Winkelencoder an Scanmechanismen unbrauchbar geworden. Am häufigsten fielen dabei die Lichtquellen, obwohl redundant vorhanden, aus.

Ein weiterer kritischer Punkt sind die Encoderscheiben. Meistens bestehen sie aus Glas und ihre Montage ist äußerst schwierig bezüglich Vibrationsfestigkeit und Thermalverhalten der verschiedenen Materialien.

Das im folgenden beschriebene Prinzip des erfindungsgemäßen hochauflösenden Winkel- oder Linearencoders nutzt die Möglichkeiten präziser Mechanik in Verbindung mit hochauflösenden Positionssensoren, sowie intelligenter Signalauswertung und Fehlerkorrektur mit Hilfe eines Mikroprozessors. Da Positionssensoren, induktiv oder kapazitiv, aus Sicht der Zuverlässigkeit, prinzipiell mechanische Bauteile sind, besteht der Kern des Winkel- oder Linearencoders aus rein mechanischen Bauteilen. Die Nutzung differentieller Meßmethoden macht ihn auch weitgehend von der Temperatur unabhängig, was z.B. den Einsatz bei sehr tiefen oder hohen Temperaturen ermöglicht.

### Aufgabe

Der Erfindung liegt die Aufgabe zugrunde, einen hochauflösenden Absolutencoder zu schaffen, der sich durch hohe Zuverlässigkeit und Vibrationsfestigkeit sowie geringe Temperaturabhängigkeit auszeichnet.

Diese Aufgabe wird durch die im kennzeichnenden Teil des Anspruchs 1 genannten Merkmale gelöst. Weitere Vorteile und Ausführungsformen ergeben sich aus den Unteransprüchen und aus der Beschreibung.

### Aufbau des Encoders

Der Encoder besteht aus den folgenden Baugruppen:
1. eine Konturenscheibe,
2. wenigstens zwei Positionssensoren für die Feinauflösung,
3. eine Segmenterkennung und
4. eine Auswerteelektronik.

Die Funktion des Encoders beruht auf der Umsetzung einer Dreh- oder Linearbewegung in eine Abstandsänderung, welche dann mit differentiell geschalteten Abstandssensoren gemessen werden kann. Eine bestimmte Abstandsänderung entspricht dann einer bestimmten Winkel- oder Wegänderung.

Hochgenaue Abstandssensoren arbeiten nur in einem kleinen Wegbereich linear und sind in der Lage, diese Wegstrecke mit ca. 13-14 Bit aufzulösen. Um mit einem Winkel- oder Linearencoder eine höhere Auflösung von z.B. 18 Bit zu erreichen, muß man einem Kreissegment diese maximale Abstandsänderung zuordnen und von Segment zu Segment wiederholen.

Weiter ist es nötig, die einzelnen Segmente unterscheiden zu können, sowie Anfang und Ende jedes Segmentes mit hoher Genauigkeit und reproduzierbar zu erkennen.

Dann ist, bezogen auf einen Nullwinkel, jedem Segmentanfang ein bestimmter Offsetwinkel zugeordnet, zu dem der hochaufgelöste Momentanwinkel des betreffenden Segmentes hinzu addiert wird. Damit ist jederzeit, auch nach kurzem Ausfall der Stromversorgung, eine Absolutwinkelerkennung möglich, ohne zum Nullpunkt zurückzukehren.

### Figurenbeschreibung

Die Erfindung wird anhand der Zeichnung näher erläutert:

Es zeigen:
- Fig. 1: den prinzipiellen Aufbau eines erfindungsgemäßen Encoders in einer räumlichen Darstellung,
- Fig. 2: Die Segmente der Konturenscheibe in einer Abwicklung, wobei Ober- und Unterseite der Konturenscheibe um 180° versetzt sind,
- Fig. 3: eine kreisförmig ausgebildete Zone im Zentrum der Konturenscheibe mit zwei weiteren Positionssensoren in einer Seitenansicht,
- Fig. 4: die Funktion der Ausgangssignale der weiteren Positionssensoren in Abhängigkeite vom Drehwinkel φ,
- Fig. 5: einen Teil der Auswerteschaltung,
- Fig. 6: einen weiteren Teil der Auswerteschaltung (Zonenauswertung),
- Fig. 7: die sägezahnförmigen Elemente mit den Grobwinkelzonen und den Signalen der Auswerteschaltung,
- Fig. 8: eine Weiterbildung des Absolutencoders mit als Spulen ausgebildeten Positionssensoren auf einer Leiterplatte,
- Fig. 9: das Prinzip der Positionsmessung der Weiterbildung,
- Fig. 10: eine mögliche Ausbildung der Auswerteelektronik der Weiterbildung.

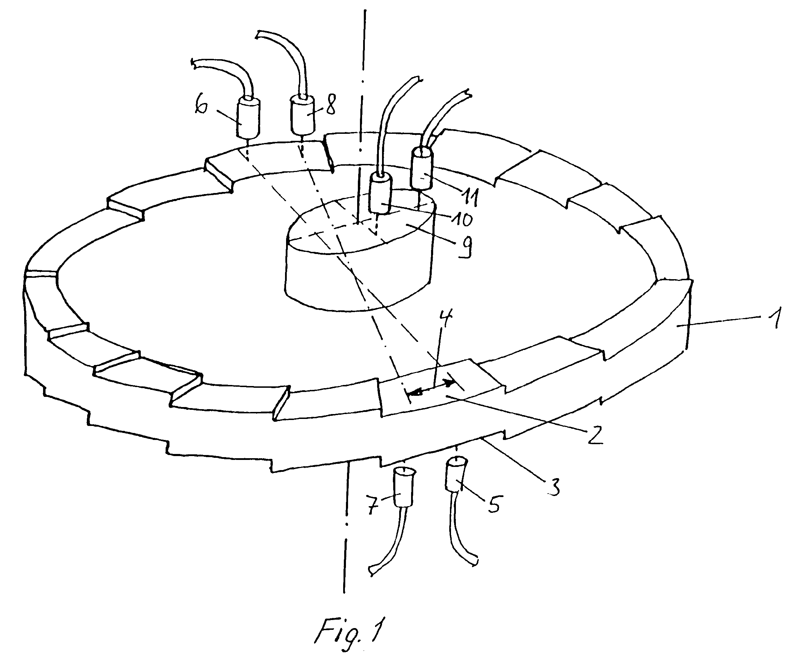

Fig. 1 zeigt den prinzipiellen Aufbau eines erfindungsgemäßen Winkelencoders. In einer anderen Ausführungsform der vorliegenden Erfindung kann der Encoder auch als Linearencoder ausgebildet sein.

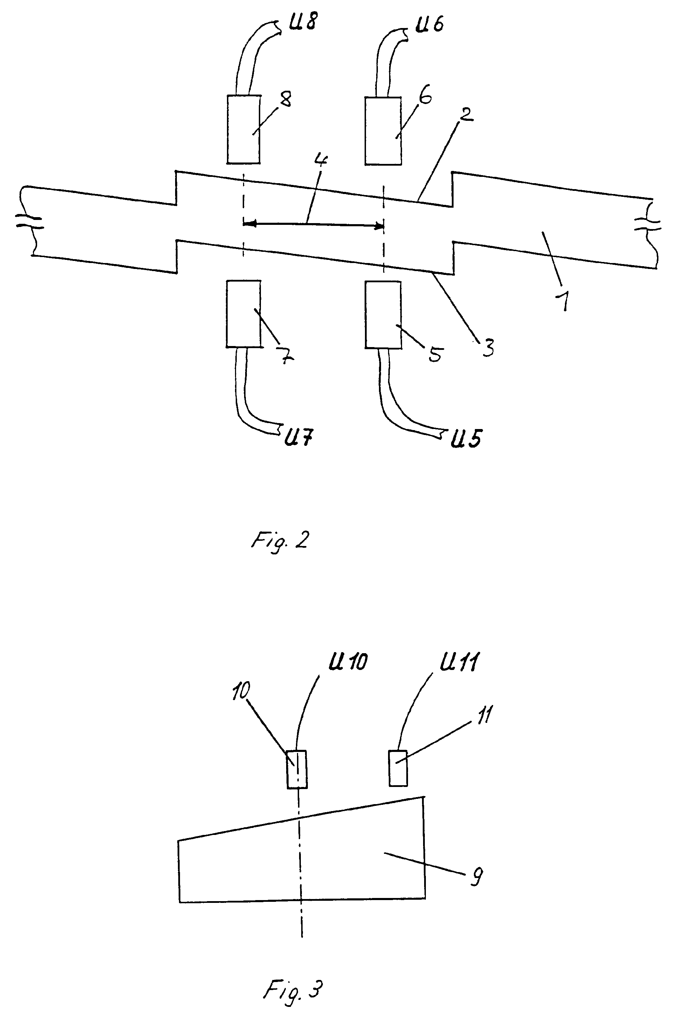

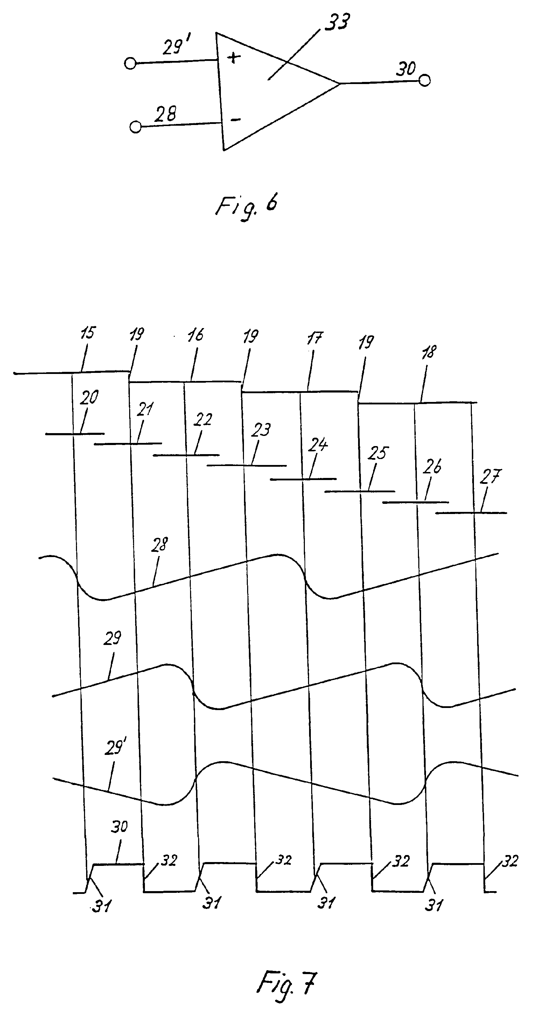

Den Zweck der Kreisunterteilung in Segmente erfüllt die Konturenscheibe 1. Sie weist an ihrem äußeren Rand an der Oberseite 2 und an der Unterseite 3 sägezahnartige Konturen auf, wobei eine Sägezahnlänge genau zwei Winkelsegmenten 4 entspricht. Zwei Sensorpaare 5, 6 und 7, 8 sind so angeordnet, daß jeweils ein Sensor 5 oder 7 an der Unterseite mit einem Sensor 6 oder 8 an der Oberseite über Differenzverstärker 34, 35 (Fig. 5) verschaltet ist. Außerdem sind zusammengehörende Sensoren um 180° auf der Konturenscheibe 1 versetzt. Durch diese Maßnahmen werden nicht nur Temperatureffekte, sondern auch mechanische Effekte wie zum Beispiel ein Höhenschlag der Konturenscheibe 1 durch nicht ideale Lagerung aus der Messung weitgehend eliminiert. Die Steigung der sägezahnartigen Konturen der Konturenscheibe 1 kann auf der Ober- und Unterseite gleich sein, wie in Fig. 1 dargestellt. Sie kann aber auch entgegengesetzt verlaufen oder gegeneinander versetzt sein. Es können auch beide Konturspuren auf einer Seite sein. Die Anordnung der Sensoren 5, 6, 7, 8 und die Form der Konturenscheibe 1 zeigt noch einmal Fig. 2 in einer Abwicklung. Oberseite 2 und Unterseite 3 der Konturenscheibe 1 sind um 180° versetzt dargestellt.

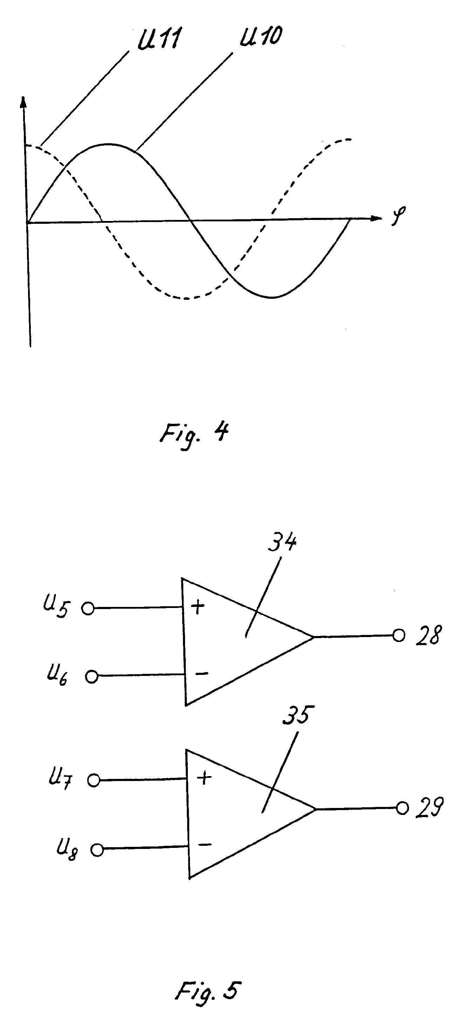

Die bisher beschriebene Anordnung dient der Feinauflösung einzelner Segmente. Um die einzelnen Segmente identifizieren und einem Offsetwinkel zuordnen zu können, sind zwei weitere Positionssensoren 10, 11 nötig. Diese sind um 90° versetzt über einer kreisförmigen Zone 9 im Zentrum der Konturenscheibe 1 angeordnet. Die Oberfläche dieser Scheibe bildet eine schräge Ebene, die keilförmig bezüglich der Konturenscheiben-Mittelebene verläuft. Fig. 3 zeigt eine Seitenansicht der Keilform 9 sowie die Anordnung der Positionssensoren 10 und 11.

Fig. 4 zeigt die Funktionen der Sensorsignale der Sensoren 10 und 11. Eine Drehung der Konturenscheibe 1 erzeugt ein sinusförmiges 13 bzw. cosinusförmiges 14 Signal an den Ausgängen der Sensoren 10 und 11.

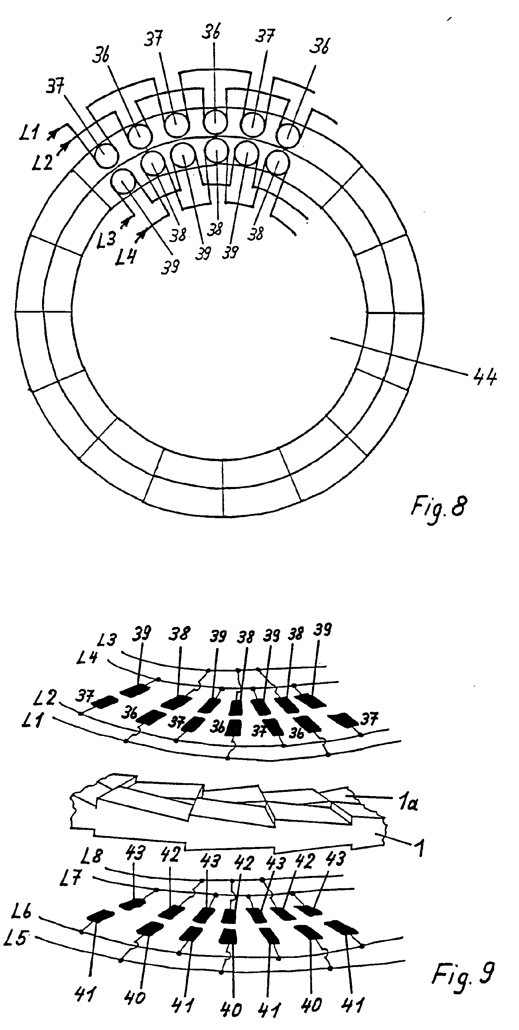

Daraus kann eine grobe Winkelbestimmung auf dem vollen Umfang durchgeführt werden. Die erforderliche Genauigkeit ist hier nicht sehr hoch, es genügt eine Auflösung von 1/5 Segment. Daraus resultieren die Grobwinkelzonen 20, 21, ... 27 usw. in Fig. 7, deren Anfang und Ende gewisse Unschärfen aufweisen. Die eigentliche Genauigkeit der Übergänge von Segment 15 zu Segment 16 oder Segment 16 zu Segment 17, usw. wird aus den hochauflösenden Signalen 28 und 29 gewonnen.

Die Figuren 5 und 6 zeigen die Auswerteschaltung des Encoders. In Fig. 5 sind zwei Differenzverstärker 34, 35 dargestellt. Die Eingangssignale der Differenzverstärker 34, 35 sind die Signale der Sensoren 5 bis 8, wobei die Sensorpaare 5, 6 und 7, 8 jeweils auf die Eingänge eines Differenzverstärkers geschaltet sind. Die Encoderelektronik hat die Aufgabe, zu erkennen, welches Segment sich momentan im linearen mittleren Arbeitsbereich entweder des Sensorpaares 5, 6 oder 7, 8 befindet und in Abhängigkeit davon deren Ausgangssignal 28 oder 29 zur Feinwinkelmessung heranzuziehen. Besonders kritisch ist dabei die Entscheidung im Übergangsbereich 19 zwischen je zwei Segmenten, da eine Unschärfe in diesem Bereich direkt die höchste erreichbare Winkelauflösung des Encoders darstellt. Wenn zunächst die Grobwinkelzonen 20, 21, ... 27, usw. betrachtet werden, dann ist sofort ersichtlich, daß z.B. in Zone 22 das Feinwinkelsignal 28 zur Auswertung kommt, mit dem dazu gehörigen Offsetwinkel von Segment 16, da sich Zone 22 in der Mitte des linearen mittleren Bereiches des Feinwinkelsignals 28 befindet. Das gleiche gilt für Zone 26, für die sich nur der Offsetwinkel entsprechend Segment 18 ändert.

Dagegen wird für die Zone 20 oder 24 das Feinwinkelsignal 29 mit den entsprechenden Offsetwinkeln von den Segmenten 15 oder 17 wirksam, da im Bereich dieser Zonen der lineare mittlere Teil des Feinwinkelsignals 29 liegt.

Ob in den Zonen 21, 23, 25, 27, usw. das Feinwinkelsignal 28 oder 29 zur Auswertung kommt, entscheidet ein Komparator 33, entsprechend Fig. 6.

Am negativen Eingang des Komparators 33 liegt das Feinwinkelsignal 28 und am positiven Eingang das invertierte Signal 29' des Signals 29.

Der Ausgang des Komparators 33 schaltet dann jeweils in der Mitte der Segmente 15, 16 ... und an den Segmentübergängen 19 um. Dabei erscheint das Signal 30, dessen Flanken 31 relativ unscharf sind und in der Mitte der Segmente 15, 16 ... liegen. Diese Flanken 31 werden zur Auswertung nicht benutzt. Die Flanken 32 liegen jeweils an den Segmentübergängen 19. Hier wird eine möglichst hohe Steilheit angestrebt, um den Unschärfebereich der Segmentübergänge 19 so klein wie möglich zu halten.

Im Bereich der Zonen 21, 23, 25, ... wird das Signal 30 zur Entscheidung, welches Feinwinkelsignal 28 oder 29' zur Auswertung gelangt, herangezogen.

In den Zonen 21, 23, 25, ... wird, falls Signal 30 gleich 1 ist, das Signal 29 (29') und falls Signal 30 gleich 0 ist, Signal 28 benutzt. Entsprechend werden dann die Offsetwinkel addiert. Z.B. in Zone 21 der Offsetwinkel von Segment 15, falls Signal 30 gleich 1 ist und von Segment 16, falls Signal 30 gleich 0 ist.

Die gesamte Anordnung ist auch für lineare Absolutwegmessungen über größere Bereiche anwendbar. Zur Fehlerkompensation ist dann eine Anordnung der Sensoren an nur einer Seite sinnvoller.

Fig. 8 zeigt die auf einer Leiterplatte 44 angeordnete Sensoranordnung einer Weiterbildung des Absolutencoders mit als gedruckte Spulen 36 bis 39 ausgebildeten Sensoren. Zwei der in Fig. 8 dargestellten Leiterplatten bilden die Sensoreinheit des weiterbildungsgemäßen Encoders. Das Ziel der Weiterbildung soll sein, die relativ teueren Positionssensoren des Encoders lt. Fig. 1 durch preiswerte Sensoren zu ersetzen und gleichzeitig noch eine verbesserte Fehlerunterdrückung zu erhalten.

Dazu werden auf zwei Leiterplatten gedruckte Spulen 36 bis 43 entsprechend den Figuren 8 und 9 angeordnet. Zwei Sensorspulenpaare 36, 38; 40, 42; 37, 39; 41, 43...... sind über jedem Segment der Konturenscheibe 1 auf dem vollen Kreisumfang angeordnet und jeweils parallel oder in Reihe geschaltet.

Die Spulen 36 bis 39 sind in zwei Kreisringen am äußeren Rand der Leiterplatte 44 jeweils in halber Sägezahnbreite angeordnet. Die in voller Sägezahnbreite voneinander entfernten Spulen 36; 37; 38; 39 eines Kreisringes sind jeweils parallel oder in Reihe geschaltet.

Daraus ergibt sich eine, der Segmentanzahl entsprechende, größere Induktivität, was erstens die Empfindlichkeit erhöht und zweitens das Integral über alle Segmente über den Umfang bildet. Dies führt zu einer guten Reproduzierbarkeit der Kennlinie 28 und 29 (Fig. 7) von Segment zu Segment. Die individuellen Segmentwinkel werden dabei von der Herstellgenauigkeit der gedruckten Leiterplatten und nicht mehr von der mechanischen Konturenscheibe bestimmt.

Da immer die eine Hälfte der Teilspulen 36; 37 genau die entgegengesetzte Wirkung als die andere Hälfte der Teilspulen 38, 39 erfährt wird auch ein radialer Schlag oder ein Taumeln der Konturenscheibe 1 dadurch weitgehend eliminiert.

Fig. 9 zeigt die auf einer Leiterplatte (nicht dargestellt) über der Konturenscheibe 1 angeordneten Spulen 36 bis 39 und die unter der Konturenscheibe 1 auf einer Leiterplatte (nicht dargestellt) angeordneten Spulen 40 bis 43.

Durch diese Anordnung der Spulen gegenüber der Konturenscheibe 1 wird erreicht, daß auch ein Höhenschlag der Konturenscheibe kompensiert und gleichzeitig die Empfindlichkeit der Sensoranordnung erhöht wird.

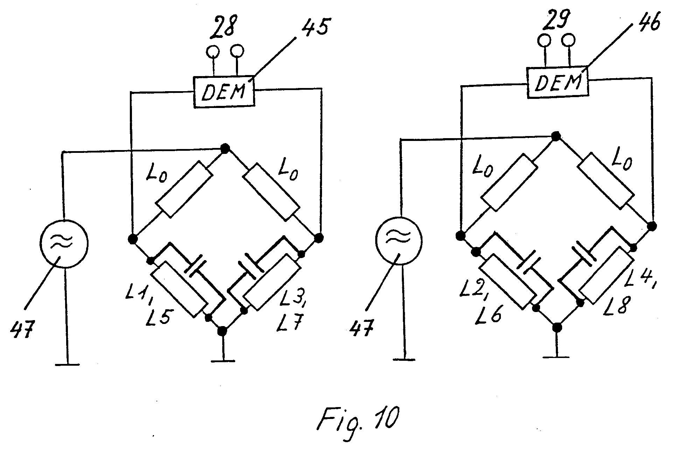

Wenn sich die Konturenscheibe 1 z.B. nach oben bewegt, werden die Güten der auf der oberen Leiterplatte angeordneten Induktivitäten L1 bis L4 kleiner, aber die Güten der auf der unteren Leiterplatte angeordneten Induktivitäten L5 bis L8 entsprechend größer, so daß die Summe der Güten der Gesamtindiktivität näherungsweise konstant bleibt, wenn die Induktivitäten L1 bis L8 entsprechend Fig. 10 zusammengeschaltet werden. Das heißt, lediglich eine Drehbewegung der Konturenscheibe 1 verändert die Güte der Schwingkreise in Fig. 10 und führt damit zu einer Anderung der Signale 28, 29. (Fig. 7).

Durch diese Anordnung ergibt sich eine billige und von der mechanischen Präzision her unkritische Lösung.

Fig. 10 zeigt eine Möglichkeit der Auswertung des weiterbildungsgemäßen Encoders als Brückenschaltung. Die jeweils in Segmentbreite voneinander entfernt liegenden Spulen 36 bis 39 der oberen Leiterplatte und die diesen gegenüberliegenden Spulen 40 bis 43 der unteren Leiterplatte sind zu den Induktivitäten L1 bis L8 zusammengeschaltet. Die Spulen 36 ergeben durch die Reihenschaltung die Induktivität L1, die Spulen 37 ergeben die Induktivität L2, die Spulen 38 ergeben die Induktivität L3 usw.

Die zusammengefaßten Induktivitäten L1 und L5, bestehend aus den einander gegenüberliegenden Spulen 36 und 40 der oberen und unteren Leiterplatte, bilden einen Brückenzweig (Fig. 10a). Den zweiten Brückenzweig ergeben die Induktivitäten L3 und L7. Die anderen Brückenzweige werden durch Referenzinduktivitäten L0 gebildet. Es wird davon ausgegangen, daß die Funktion dieser Brückenschaltung allgemein bekannt ist. Die Ausgangssignale 28 und 29 entsprechen den Signalen 28, 29 in Fig. 7.

## Patentansprüche

1. Encoder enthaltend
einen drehbaren oder längsverschieblichen Körper (1) mit einer Vielzahl von in Dreh- oder Verschiebungsrichtung hintereinanderliegenden sägezahnförmig ausgebildeten Bereichen (15 bis 18), wobei jeder sägezahnförmige Bereich vom nachfolgenden sägezahnförmigen Bereich durch eine sich quer zur Dreh- oder Verschiebungsrichtung erstreckende steile Flanke (19) getrennt ist und wobei sich bei Bewegung des Körpers aufgrund der sägezahnförmigen Ausbildung der Abstand der Oberfläche der sägezahnförmig ausgebildeten Bereiche gegenüber einer Abstandssensoranordnung (5 bis 8) ändert,
eine Auswerteschaltung, der die Ausgangssignale der Abstandssensoranordnung zugeführt werden und die daraus den Drehwinkel bzw. die Verschiebung des Körpers (1) bestimmt,
dadurch gekennzeichnet,
a) daß die Sensoranordnung (5 bis 8, L1 bis L8) aus zwei in Bewegungsrichtung um weniger als einen sägezahnförmigen Bereich (2, 3) gegeneinander versetzte Abstandssensoren (5 bis 8, L1 bis L8) zur Bildung von Abstandssignalen besteht, wobei die Abstandssignale der Auswerteschaltung (33, 34, 35: L0, 45, 46, 47) zugeführt werden und wobei die Auswerteschaltung (33, 34, 35; LO, 45, 46, 47) fortlaufend nur das Abstandssignal desjenigen Abstandssensors zur Winkelbestimmung bzw. zur Bestimmung der Verschiebung des Körpers (1) auswertet, der sich gerade am mittleren Abschnitt (4) eines sägezahnförmigen Bereiches befindet,
b) daß die gesamte den Abstandssensoren (5 bis 8; L1 bis L8) zugewandte Oberfläche des dreh- oder längsverschieblichen Körpers (1) übereinstimmende sägezahnförmige Bereiche (2, 3) aufweist,
c) daß ein Grobmeßsystem (9, 10, 11) vorhanden ist, durch dessen der Auswerteschaltung zugeführte Signale die einzelnen sägezahnförmigen Bereiche (2, 3) gekennzeichnet sind,
d) daß in der Auswerteschaltung (33, 34, 35; LO, 45, 46, 47) den einzelnen sägezahnförmigen Bereichen (2, 3) ein den Drehwinkel oder die Verschiebung kennzeichnendes Offsetsignal zugeordnet ist und
e) daß in der Auswerteschaltung (33, 34, 35; LO, 45, 46, 47) aus dem gültigen Offsetsignal und dem Signal des gerade verwendeten Abstandssensors (5 bis 8; L1 bis L8) das absolute Drehwinkel- oder Verschiebungssignal gebildet wird.

2. Encoder nach Anspruch 1, dadurch gekennzeichnet, daß durch die Auswerteschaltung (33, 34, 35) jeweils nur der mittlere Abschnitt (4) der sägezahnförmig ausgebildeten Bereiche (2, 3) ausgewertet wird, indem die Auswerteschaltung (33, 34, 35) über einen Differenzverstärker (34, 35) und einen Komparator (33) jeweils die vorbestimmte Grenze eines mittleren Abschnittes (4) ermittelt, an der die durch einen Abstandssensor (5 bis 8) gegebene Winkelauflösung auf den Wert absinkt oder ansteigt, auf welchen sie zugleich beim anderen Abstandssensor in dessen Abschnitt (4) ansteigt bzw. absinkt, und indem die Auswerteschaltung (33, 34, 35) an dieser vorbestimmten Grenze die Auswahl unter den Abstandssensoren (5 bis 8) ändert, so daß aus der Summe der den mittleren Abschnitten (4) der sägezahnförmigen Bereiche (2, 3) zugeordneten Offsetzverschiebungen und den mit hoher Auflösung gemessenen Verschiebungen der jeweiligen mittleren Abschnitte (4) ein Absolutwinkel bzw. eine Absolutverschiebung mit hoher Genauigkeit bestimmt wird.

3. Encoder nach den Ansprüchen 1 und 2, dadurch gekennzeichnet, daß jeweils das Abstandsmeßergebnis des Abstandssensors (5 bis 8) für die Winkelbestimmung bzw. Bestimmung der Verschiebung des Körpers (1) benutzt wird, der dem mittleren Abschnitt (4) der weniger steilen Flanke eines sägezahnförmigen Bereiches gegenüber steht.

4. Encoder nach Anspruch 3, dadurch gekennzeichnet, daß zur Erkennung der mittleren Abschnitte (4) und deren genauer Grenzen die Phasenlage der Ausgangssignale (28, 29') eines Feinmeßsystems der Abstandssensoren (5 bis 8) zusammen mit den Signalen des Grobmeßsystems (9, 10, 11) ausgewertet werden.

5. Winkel-Encoder nach einem der Ansprüche 1 bis 4, dadurch gekennzeichnet, daß jeder Abstandssensor (5, 7 oder 6, 8) mit einem um 180° räumlich versetzten zweiten Abstandssensor (6, 8 oder 5, 7) ein Abstandssensorpaar (5, 6; 7, 8) bildet, daß auch dem zweiten Abstandssensor (6, 8 oder 5, 7) sägezahnförmig ausgebildete Bereiche (2, 3) derart zugeordnet sind, daß sich die Abstände zwischen einerseits den Oberflächen der sägezahnförmigen Bereiche (2, 3) und andererseits den gegeneinander um 180° räumlich versetzten Abstandssensoren (6, 8 oder 5, 7) bei jeweils einer Bewegungsrichtung entgegengesetzt ändern, und daß die Abstandssensorpaare (5, 6; 7, 8) mit je einem Differenzverstärker (34, 35) verbunden sind.

6. Encoder nach Anspruch 1, dadurch gekennzeichnet, daß jedem sägezahnförmigen Bereich (2, 3) ein Sensorpaar (36, 37; 38, 39; 40, 41; 42, 43) zugeordnet ist, wobei der Abstand zweier Sensoren (36, 37) eines Sensorpaares voneinander der halben Sägezahnbreite entspricht und in der Folge der Sensoren mehrerer Sensorpaare der erste Sensor (36 bis 43) mit dem dritten und der zweite Sensor (36 bis 43) mit dem vierten entweder hintereinander oder parallel geschaltet ist.

7. Encoder nach einem der Ansprüche 1 bis 6, dadurch gekennzeichnet, daß mit dem beweglichen Körper (1) ein weiterer beweglicher Körper (1a) verbunden ist, dem ebenfalls wenigstens ein Sensorpaar (38, 39, 42, 43) zugeordnet ist.

8. Encoder nach Anspruch 6, dadurch gekennzeichnet, daß die Abstandssensoren (36 bis 43) durch auf Platinen gedruckte Spulen gebildet sind.

## Claims

1. An encoder comprising:
a rotatable or longitudinally displaceable body (1) having a plurality of sawtooth-shaped regions (15 to 18) which lie one behind the other in the direction of rotation or displacement, each being separated from the next sawtooth-shaped region by a steep edge that extends transversely to the direction of rotation or displacement and, wherein, due to the sawtooth-shaped configuration, movement of the body causes the distance of the surface of the sawtooth-shaped regions to change relative to an arrangement of distance sensors (5 to 8);
an evaluation circuit which receives the output signals from the distance sensor arrangement and determines therefrom the rotation angle or the displacement, respectively, of the body (1),
characterized in that
(a) the sensor arrangement (5 to 8, L1 to L8) is composed of two distance sensors (5 to 8, L1 to L8) that are offset relative to one another in the direction of movement by less than one sawtooth-shaped region (2, 3) for forming distance signals, with the distance signals being fed to the evaluation circuit (33, 34, 35; LL0, 45, 46, 47) and the evaluation circuit (33, 34, 35; L0, 45, 46, 47), in order to determine the angle or the displacement, respectively, of the body (1), continuously evaluates only the distance signal from that distance sensor which is presently disposed in the center section (4) of a sawtooth-shaped region;
(b) the entire surface area of the rotationally or longitudinally displaceable body (1) facing the distance sensors (5 to 8; L1 to L8) has coinciding sawtooth-shaped regions (2, 3);
(c) a rough measuring system (9, 10, 11) is present, with the individual sawtooth-shaped regions (2, 3) being identified by signals from the rough measuring system that are fed to the evaluation circuit;
(d) in the evaluation circuit (33, 34, 35; L0, 45, 46, 47) an offset signal characterizing the rotation angle or the displacement is associated with each sawtooth-shaped region (2, 3); and
(e) the evaluation circuit (33, 34, 35; L0, 45, 46, 47) forms the absolute rotation angle or displacement signal from the applicable offset signal and the signal of the presently employed distance sensor (5 to 8; L1 to L8).

2. An encoder according to claim 1, characterized in that the evaluation circuit (33, 34, 35) evaluates in each case only the center section (4) of the sawtooth-shaped regions (2, 3) in that the evaluation circuit (33, 34, 35) determines, by means of a differential amplifier (34, 35) and a comparator (33), the respective predetermined border of a center section at which the angle resolution given by a distance sensor (5 to 8) drops or rises to the value at which it simultaneously increases or decreases, respectively, for the other distance sensor in its section (4), and in that the evaluation circuit (33, 34, 35), at this predetermined border, changes the selection from among the distance sensors (5 to 8) in such a way that an absolute angle or an absolute displacement, respectively, is determined with high precision from the sum of the offset displacements associated with the center sections (4) of the sawtooth-shaped regions (2, 3) and the displacements of the respective center sections (4) measured with high resolution.

3. An encoder according to claims 1 and 2, characterized in that the distance measuring result of the distance sensor (5 to 8) disposed opposite the center section (4) of a sawtooth-shaped region having a less steep edge is utilized in each case for determining the angle or displacement, respectively, of the body (1).

4. An encoder according to claim 3, characterized in that the phase position of the output signals (28, 29') of a precision measuring system of the distance sensors (5 to 8) together with the signal from the rough measuring system (9, 10, 11) are evaluated in order to detect the center section (4) and its precise borders.

5. An angle encoder according to one of claims 1 to 4, characterized in that each distance sensor (5, 7 or 6, 8) and a second distance sensor (6, 8 or 5, 7) offset in space thereto by 180° form a pair of sensors (5, 6; 7, 8); the second distance sensor (6, 8 or 5, 7) also has associated sawtooth-shaped regions (2, 3) such that the distances between the surfaces of the sawtooth-shaped regions (2, 3), on the one hand, and the distance sensors (6, 8 or 5, 7) which are offset in space relative to each other by 180° change in opposite directions for each movement direction and the distance sensor pairs (5, 6; 7, 8) are each connected with a differential amplifier (34, 35).

6. An encoder according to claim 1, characterized in that each sawtooth-shaped region (2, 3) has an associated sensor pair (36, 37; 38, 39; 40, 41; 42, 43), with the distance between the two sensors (36, 37) of one sensor pair corresponding to one-half a sawtooth length, and, in the sequence of the sensors of a plurality of sensor pairs, the first sensor (36 to 43) is connected with the third sensor and the second sensor (36 to 43) with the fourth sensor either in series or in parallel.

7. An encoder according to one of claims 1 to 6, characterized in that the movable body (1) is connected with a further movable body (1a) which also has associated with it at least one sensor pair (38, 39, 42, 43).

8. An encoder according to claim 6, characterized in that the distance sensors (36 to 43) are formed by coils that are printed on thin plates.

## Revendications

1. Codeur, comprenant:
un corps (1) rotatif ou mobile en translation, comprenant une pluralité de régions (15 à 18) disposées les unes derrière les autres dans la direction de rotation ou de déplacement et réalisées en forme de dents de scie, chaque région en forme de dent de scie étant séparée de la région en forme de dent de scie suivante par un flanc (19) raide qui s'étend transversalement à la direction de rotation ou de déplacement, et lors du mouvement du corps et en raison de la réalisation en forme de dents de scie, la distance entre la surface des régions réalisées en forme de dents de scie et un agencement détecteur de distance (5 à 8) varie,
un circuit d'évaluation, auquel sont amenés les signaux de sortie de l'agencement détecteur de distance, et qui détermine à partir de ces signaux l'angle de rotation ou la translation du corps (1),
caractérisé en ce que
a) l'agencement de détection (5 à 8, L1 à L8) est formé par deux détecteurs de distance (5 à 8, L1 à L8) décalés l'un par rapport à l'autre dans la direction de déplacement d'une valeur inférieure à une région (2, 3) en forme de dent de scie, afin de former des signaux de distance, lesdits signaux de distance étant fournis au circuit d'évaluation (33, 34, 35; L0, 45, 46, 47), et le circuit d'évaluation (33, 34, 35; L0, 45, 46, 47) évalue en continue pour la détermination de l'angle ou la détermination du déplacement du corps (1), uniquement le signal de distance de celui des détecteurs de distance qui se trouvent en cours d'utilisation dans le secteur central (4) d'une région en forme de dent de scie,
b) en ce que la surface totale, dirigée vers les détecteurs de distance (5 à 8; L1 à L8), du corps mobile en rotation ou en translation (1) présente des régions coïncidentes en forme de dent de scie (2, 3),
c) en ce qu'il est prévu un système de mesure grossière (9, 10, 11), les signaux de ce système, fournis au circuit d'évaluation, servant à caractériser les régions individuelles en forme de dent de scie (2, 3),
d) en ce que dans le circuit d'évaluation (33, 34, 35; L0, 45, 46, 47), un signal de décalage qui caractérise l'angle de rotation ou la translation est associée aux régions individuelles en forme de dent de scie (2, 3), et
e) en ce que dans le circuit d'évaluation (33, 34, 35; L0, 45, 46 ,47) est formé le signal absolu d'angle de rotation ou de translation, à partir du signal de décalage valide et du signal du détecteur de distance en cours d'utilisation (5 à 8; L1 à L8).

2. Codeur selon la revendication 1, caractérisée en ce qu'on évalue au moyen du circuit d'évaluation (33, 34, 35) uniquement la section centrale (4) de chacune des régions (2, 3) réalisées en forme de dents de scie, par le fait que le circuit d'évaluation (33, 34, 35) détermine dans chaque cas la frontière prédéterminée d'une section centrale (4) au moyen d'un amplificateur différentiel (34, 35) et d'un comparateur (33), section centrale au niveau de laquelle la résolution angulaire donnée par un détecteur de distance (5 à 8) chute ou s'élève jusqu'à la valeur pour laquelle cette résolution angulaire monte ou chute également dans cette section (4) pour l'autre détecteur de distance, et par le fait que le circuit d'évaluation (33, 34, 35) modifie pour cette limite prédéterminée la sélection parmi les détecteurs de distance (5 à 8) de sorte que l'on détermine un angle absolu ou une translation absolue avec une haute précision à partir de la somme des déplacements décalés associés aux sections centrales (4) des régions en forme de dents de scie (2, 3) et des déplacements mesurés avec une haute résolution, des sections centrales respectives (4).

3. Codeur selon les revendications 1 et 2 caractérisé en ce que l'on utilise pour la détermination angulaire ou la détermination de la translation du corps (1) à chaque fois le résultat de mesure du détecteur de distance (5 à 8) qui se trouve en regard de la section centrale (4) des flancs moins raides d'une région en forme de dent de scie.

4. Codeur selon la revendication 3, caractérisé en ce que pour reconnaître la section centrale (4) et ses limites exactes, on évalue la situation de phase des signaux de sortie (28, 29') d'un système de mesure fin des détecteurs de distances (5 à 8) conjointement avec les signaux du système de mesure grossière (9, 10, 11).

5. Codeur angulaire selon l'une quelconque des revendications 1 à 4, caractérisé en ce que chaque détecteur de distance (5, 7 ou 6, 8) forme avec un second détecteur de distance décalé dans l'espace de 180° (6, 8 ou 5, 7) une paire de détecteurs de distance (5, 6; 7, 8), en ce que le second détecteur de distance (6, 8 ou 5, 7) est associé à des régions (2, 3) réalisées en forme de dents de scie, de telle sorte que les distances entre d'une part les surfaces des régions en forme de dents de scie (2, 3) et d'autre part les détecteurs de distance (6, 8 ou 5, 7) décalés l'un par rapport à l'autre dans l'espace de 180° varient en sens opposés pour chaque direction de déplacement, et en ce que les paires de détecteurs de distance (5, 6; 7, 8) sont reliées chacune à un amplificateur différentiel (34, 35.).

6. Codeur selon la revendication 1, caractérisé en ce qu'une paire de détecteurs (36, 37; 38, 39; 40, 41; 42, 43) est associée à chaque région en forme de dents de scie (2, 3), de sorte que la distance de deux détecteurs (36, 37) d'une paire de détecteurs l'un par rapport à l'autre correspond à la moitié de la largeur d'une dent de scie, et en ce que dans la succession des détecteurs de plusieurs paires de détecteurs, le premier détecteur (36 à 43) est raccordé au troisième et le second détecteur (36 à 43) est raccordé au quatrième, soit l'un derrière l'autre soit en parallèle.

7. Codeur selon l'une quelconque des revendications 1 à 6, caractérisé en ce qu'un autre corps mobile (la) est raccordé au corps mobile (1), et en ce qu'au moins une paire de détecteurs (38, 39, 42, 43) est également associée à cet autre corps mobile.

8. Codeur selon la revendication 6, caractérisé en ce que les détecteurs de distance (36 à 43) sont formés par des bobinages imprimés sur des platines.
